# EUROPÄISCHE PATENTANMELDUNG

(11) **EP 3 306 516 A1**
(43) Veröffentlichungstag der Anmeldung: **11.04.2018**
(21) Anmeldenummer: 17191419.5
(22) Anmeldetag: 15.09.2017
(51) Int. Cl.: G06F 21/83, G06F 21/36

(54) **EINGABEVORRICHTUNG UND -VERFAHREN**

(30) Priorität: 06.10.2016 CH 13392016
(71) Anmelder: AldeRava Sagl, 6948 Porza (CH)
(72) Erfinder: MIKES, Dominique, 6974 Aldesago (CH)
(74) Vertreter: Schalch, Rainer

(57) **Zusammenfassung**

Die Erfindung betrifft eine Eingabevorrichtung (10) zur Eingabe einer Sicherheitsinformation (100) umfassend eine Folge von mindestens zwei Zeichen (101, 102). Dabei weist die Eingabevorrichtung (10) eine Mehrzahl von Eingabeelementen (11, 12, 13) auf, so dass bei einem Eingabeschritt durch Betätigung eines der Eingabeelemente (11, 12, 13) jeweils ein dem Eingabeelement (11, 12, 13) zugewiesenes Zeichen (101-104) in die Eingabevorrichtung (10) eingebbar ist. Mindestens eines der Eingabeelemente (11, 12, 13) weist während mindestens einem der Eingabeschritte eine Zuweisung zu einer Mehrzahl von Zeichen auf. Weiterhin ist die Zuweisung mindestens eines der Eingabeelemente (11, 12, 13) zu einem oder mehreren Zeichen zwischen zwei Eingabeschritten und/oder zwischen zwei Eingaben der Sicherheitsinformation (100) variierbar. Dadurch wird die Sicherheit der Eingabe erhöht.

## Beschreibung

### Gebiet der Erfindung

Die Erfindung betrifft eine Vorrichtung sowie ein Verfahren zur Eingabe einer Sicherheitsinformation. Die Erfindung ist besonders für den Einsatz bei sicherheitsrelevanten Anwendungen geeignet, z.B. zur Authentifizierung einer Finanztransaktion, zur Eingabe eines Passworts oder zur Zugangskontrolle.

### Hintergrund

Im bargeldlosen Zahlungsverkehr oder beim Abheben von Bargeld aus Geldautomaten werden im allgemeinen Kredit-, ec-, oder Postkarten benutzt, wobei der Benutzer nach Einführen oder nach berührungslosem Auslesen seiner Karte in ein(em) Kartenterminal vom System aufgefordert wird, eine Transaktionsberechtigung durch Eingabe einer persönlichen Identifikationsnummer (PIN) über eine Tastatur nachzuweisen.

Bekannte Zutrittskontrollsysteme erfordern für das Betreten sicherheitsrelevanter Bereiche, z.B. in Gebäuden, die Eingabe eines persönlichen Codes mittels einer Tastatur oder eines berührungsempfindlichen Displays in ein Kontrollsystem, welches erst nach positiver Prüfung des Codes eine Türverriegelung aufhebt und den Zugang in den sicherheitsrelevanten Bereich gestattet.

Das Dokument DE 103 06 352 A1 offenbart eine Vorrichtung und ein Verfahren zum geschützten Eingeben von Codenummern, persönlichen Identifikationsnummern (PIN), Passworten und dergleichen. Dabei sind variable Tastenbelegungen offenbart.

Das Dokument DE 10 2004 031 677 A1 offenbart ein Gerät mit einem Bildschirm zur Eingabe eines Geheimcodes. Auch hier sind die Belegung der Tastensymbole und/oder die Positionen der Tasten auf dem Bildschirm variierbar.

Das Dokument GB 2 388 229 A offenbart ein Tastenfeld zur Eingabe eines Sicherheitscodes mit veränderlichem Tastenlayout.

Die bekannten Eingabevorrichtungen weisen jedoch den Nachteil verminderter Sicherheit auf, da die Eingabe der Sicherheitsinformation z.B. mittels einer Miniaturkamera ausgespäht werden kann. Bisher besteht deshalb einzig die Möglichkeit, die Beobachtung durch den eigenen Körper oder mit entsprechendem Sichtschutz zu erschweren, ein Aufzeichnen der Eingabe lässt sich nicht verhindern.

### Darstellung der Erfindung

Somit ist es eine Aufgabe der Erfindung, eine Eingabevorrichtung bzw. ein Eingabeverfahren für eine Sicherheitsinformation mit verbesserter Sicherheit bereitzustellen, sowie ein hierfür ausgestaltetes Computerprogrammprodukt.

Diese Aufgabe wird durch die Vorrichtungen bzw. Verfahren mit den Merkmalen der unabhängigen Patentansprüche gelöst.

Im Rahmen dieser Beschreibung umfasst die Sicherheitsinformation eine Folge von mindestens zwei Zeichen, d.h. Zahlen, Symbole, Bilder, Farben oder Buchstaben des lateinischen oder eines anderen Alphabets, bzw. eine Kombination dieser. Allgemein wird der Begriff "Zeichen" verwendet, welcher sich somit auf diese Zahlen, Symbole, Bilder, Farben, Buchstaben etc. beziehen kann oder auch auf eine Kombination. Die Sicherheitsinformation ist besonders für die Authentifizierung sicherheitsrelevanter Anwendungen geeignet, z.B. bei einer Finanztransaktion, zur Eingabe eines Passworts an einem Computer, zur Zugangskontrolle in Gebäuden, zur Entsperrung eines Mobiltelefons etc.

Eine erfindungsgemässe Eingabevorrichtung zur Eingabe einer Sicherheitsinformation (umfassend eine Folge von mindestens zwei Zeichen) weist dabei eine Mehrzahl von Eingabeelementen auf. Bei einem Eingabeschritt durch Betätigung eines der Eingabeelemente ist somit jeweils ein dem betätigten Eingabeelement zugewiesenes Zeichen in die Eingabevorrichtung eingebbar.

Erfindungsgemäss ist mindestens eines der Eingabeelemente während mindestens einem der Eingabeschritte zu einer Mehrzahl von Zeichen zugewiesen - oder - mit anderen Worten - das Eingabeelement ist mit mehreren Zeichen "belegt". Ein erstes Eingabeelement kann beispielsweise mit den Ziffern "1", "5" und "6" belegt sein bzw. diesen zugewiesen sein, ein zweites Eingabeelement den Ziffern "2", "3" und "4". Somit ist kein direkter Bezug zwischen dem betätigen Eingabeelement und dem eigentlich eingegebenen Zeichen der Sicherheitsinformation von aussen erkennbar, was die Sicherheit erhöht, indem ein unbefugter Beobachter keine Rückschlüsse auf die Sicherheitsinformation bzw. das eingegebene Zeichen ziehen kann.

Weiterhin ist die Zuweisung mindestens eines der Eingabeelemente zu einem oder mehreren Zeichen zwischen zwei Eingabeschritten und/oder zwischen zwei Eingaben der Sicherheitsinformation variierbar, z.B. in einem zufälligen oder pseudozufälligen Muster. Im oben genannten Beispiel kann das erste Eingabeelement bei einem anderen, z.B. nächsten, Eingabeschritt während der Eingabe der Sicherheitsinformation beispielsweise mit den Ziffern "1", "3" und "6" belegt sein bzw. diesen zugewiesen sein, das zweite Eingabeelement den Ziffern "2", "4" und "5". Diese Variation kann alternativ oder zusätzlich auch (erst) bei einer erneuten Eingabe der Sicherheitsinformation erfolgen. Dies erhöht die Sicherheit weiter, da eine blosse Wiederholung einer z.B. abgefilmten Eingabesequenz aufgrund der variablen (und z.B. zufälligen) Zeichen-Zuweisungen mit sehr grosser Wahrscheinlichkeit eine falsche Sicherheitsinformation hervorbringt.

Weitere Schritte können in einem solchen Fall eingeleitet werden, z.B. progressive oder konservative Eingabeverzögerung bei (z.B. mehrfacher) fehlerhafter Eingabe, automatische photographische Aufnahme des Benutzers mit Hilfe einer eingebauten Kamera, automatisierte Warnmeldung an Sicherheitsbehörden, Einbehalten und/ oder Sperren der Karte, Begrenzung eines Finanztransaktionsvolumens etc.

Bevorzugt ist die Eingabevorrichtung derart ausgestaltet, dass die Zuweisung mindestens eines der Eingabeelemente (insbesondere aller Eingabeelemente) zu einem oder mehreren dem Eingabeelement zugewiesenen Zeichen zwischen zwei Eingabeschritten, insbesondere zwischen allen Eingabeschritten, variiert wird, insbesondere in einem zufälligen oder pseudozufälligen Muster. Dies erhöht die Sicherheit weiter, da durch die Kombination "mehrfache Zuweisung" und "variable zufällige Zuweisung" keine Rückschlüsse auf die Sicherheitsinformation möglich sind.

In einer anderen bevorzugten Ausführungsform ist die Eingabevorrichtung derart ausgestaltet, dass die Zuweisung mindestens eines der Eingabeelemente (insbesondere aller Eingabeelemente) zu einem oder mehreren dem Eingabeelement zugewiesenen Zeichen zwischen zwei Eingaben der Sicherheitsinformation variiert wird, insbesondere in einem zufälligen oder pseudozufälligen Muster. Dies erhöht die Sicherheit weiter, da durch die Kombination "mehrfache Zuweisung" und "variable zufällige Zuweisung" keine Rückschlüsse auf die Sicherheitsinformation möglich sind. Dabei kann auch vorgesehen sein, die Zuweisungen während aller Eingabeschritte bei einer einzelnen Eingabe der Sicherheitsinformation konstant zu halten und nur zwischen zwei Eingaben der Sicherheitsinformation zu variieren, was die Bedienbarkeit verbessert.

In einer bevorzugten Ausführungsform weist jedes der Eingabeelemente der Eingabevorrichtung während mindestens einem Eingabeschritt, insbesondere während allen Eingabeschritten, jeweils eine Zuweisung zu einer gleichen Anzahl von zugewiesenen Zeichen auf. Mit anderen Worten sind einem ersten Eingabeelement z.B. drei Zeichen zugewiesen, einem zweiten Eingabeelement ebenfalls usw. Somit wird die Übersichtlichkeit erhöht. Dabei kann sich die Anzahl der zugewiesenen Zeichen pro Eingabeelement für unterschiedliche Eingabeschritte ändern. Dies erhöht die Sicherheit weiter, da mehr Variationsmöglichkeiten zur Verfügung stehen.

In einer anderen bevorzugten Ausführungsform weisen mindestens zwei der Eingabeelemente während mindestens einem Eingabeschritt (insbesondere während allen Eingabeschritten) eine Zuweisung zu einer unterschiedlichen Anzahl von Zeichen auf. Somit kann die Sicherheit weiter erhöht werden, da eine grössere Anzahl von Konfigurationen ermöglicht wird. Auch hier kann sich die Anzahl der zugewiesenen Zeichen pro Eingabeelement für unterschiedliche Eingabeschritte ändern. Dies erhöht die Sicherheit weiter, da mehr Variationsmöglichkeiten zur Verfügung stehen.

Die Eingabevorrichtung weist bevorzugt eine Anzeigevorrichtung auf, welche die Zuweisungen der den einzelnen Eingabeelementen zugewiesenen Zeichen für jeden Eingabeschritt anzeigt. Somit wird eine leichtere Bedienbarkeit ermöglicht, da die Zuweisungen für den Benutzer sofort ersichtlich sind. Eine Anzeige kann z.B. auf einem Bildschirm erfolgen, während die Eingabeelemente als mechanische Tasten ausgestaltet und rund um den Bildschirm angeordnet sind. Eine alternative Möglichkeit ist die Ausgestaltung mittels Anzeigeelementen (z.B. LED, LCD) in den mechanischen Tasten selbst.

Besonders bevorzugt umfasst die Eingabevorrichtung einen berührungsempfindlichen Bildschirm, wobei die Eingabeelemente durch gekennzeichnete Bereiche auf dem berührungsempfindlichen Bildschirm gebildet bzw. dargestellt werden.

Dabei können die Zuweisungen der den Eingabeelementen zugewiesenen Zeichen bevorzugt in den jeweiligen gekennzeichneten Bereichen auf dem berührungsempfindlichen Bildschirm angezeigt werden. Eine Betätigung des jeweils "richtigen" Eingabeelements wird somit stark vereinfacht, da ein Benutzer die momentan gültigen Zuweisungen sofort erkennen kann und die Eingabe mittels Betätigen des jeweiligen Bereichs auf dem berührungsempfindlichen Bildschirms erfolgen kann.

In einer anderen bevorzugten Ausführungsform umfasst die Eingabevorrichtung mindestens ein Eingabeelement, welches keinem der möglichen Zeichen der Sicherheitsinformation zugewiesen ist, z.B. ein "Abbruch" und ein "OK"-Eingabeelement. Diese Eingabeelemente werden bevorzugt nicht variiert (zumindest nicht in ihrer Zuweisung bzw. Belegung, möglicherweise allerdings in ihrer geometrischen Ausgestaltung, z.B. Position), so dass die Bedienbarkeit der Eingabevorrichtung erleichtert wird.

Eine andere bevorzugte Eingabevorrichtung umfasst weiterhin mindestens eines aus der Gruppe bestehend aus:
- ein Kartenterminal, z.B. zum Auslesen und/ oder Beschreiben eines Magnetstreifens oder Chips einer ec-/Post-/Kreditkarte,
- ein drahtgebundenes oder drahtloses Kommunikationsgerät, insbesondere beinhaltend RFID, NFC, Bluetooth und/ oder BLE, z.B. zum Datenaustausch mit einer Karteneinheit oder einem Smartphone oder einem persönlichen Zugangsschlüssel oder einem persönlichen Zugangsbadge,
- eine Kamera, z.B. zur Gesichtserkennung oder zum Abfotografieren eines Benutzers,
- ein Iris-Scanner, z.B. zur Erkennung physiologischer Augenmerkmale eines Benutzers,
- ein Fingerabdruck-Sensor, z.B. zur Erkennung physiologischer Fingermerkmale eines Benutzers.

Diese Zusatzinformationen können als Teil der Sicherheitsinformation verarbeitet werden, was die Sicherheit der Authentifizierung weiter erhöht.

In einer anderen bevorzugten Ausführungsform ist die Eingabevorrichtung dazu ausgestaltet, eine Position und/ oder eine geometrische Ausgestaltung (z.B. Grösse, Ausrichtung, Form etc.) mindestens eines der Eingabeelemente, insbesondere aller Eingabeelemente, zwischen zwei Eingabeschritten, insbesondere zwischen allen Eingabeschritten, und/oder zwischen zwei Eingaben der Sicherheitsinformation zu variieren, z.B. auf einem berührungsempfindlichen Bildschirm. Somit wird die Sicherheit weiter erhöht.

Als ein weiterer Aspekt der Erfindung umfasst ein erfindungsgemässes Verfahren zur Eingabe einer Sicherheitsinformation (umfassend eine Folge von mindestens zwei Zeichen) die folgenden Schritte:
- in einem ersten Eingabeschritt Eingabe eines Zeichens durch Betätigung eines Eingabeelements aus einer Mehrzahl von Eingabeelementen einer Eingabevorrichtung und
- in einem zweiten Eingabeschritt Eingabe eines Zeichens durch Betätigung eines Eingabeelements aus einer Mehrzahl von Eingabeelementen der Eingabevorrichtung.

Weitere Eingabeschritte bzw. Sicherheitsinformationen mit mehr als zwei Zeichen sind vorteilhaft. An dieser Stelle sei darauf hingewiesen, dass die Eingabe eines Zeichens der Sicherheitsinformation auch das (z.B. gleichzeitige) Betätigen von mehr als einem Eingabeelement umfassen kann. Beispielsweise kann ein Eingabeelement eine "Umschaltfunktion" für ein anderes Eingabeelement aufweisen.

Erfindungsgemäss weist mindestens eines der Eingabeelemente während mindestens einem der Eingabeschritte eine Zuweisung zu einer Mehrzahl von Zeichen auf. Mit anderen Worten ist das Eingabeelement mit mehreren Zeichen "belegt". Ein erstes Eingabeelement kann beispielsweise mit den Ziffern "1", "5" und "6" belegt sein bzw. diesen zugewiesen sein, ein zweites Eingabeelement den Ziffern "2", "3" und "4". Somit ist kein direkter Bezug zwischen dem betätigten Eingabeelement und dem eingegebenen Zeichen von aussen erkennbar, was die Sicherheit erhöht, indem ein unbefugter Beobachter keine Rückschlüsse auf die Sicherheitsinformation bzw. das eingegebene Zeichen ziehen kann.

Weiterhin wird die Zuweisung mindestens eines der Eingabeelemente (vorzugsweise aller Eingabeelemente) zu einem oder mehreren Zeichen zwischen dem ersten und dem zweiten Eingabeschritt und/oder zwischen zwei Eingaben der Sicherheitsinformation variiert, z.B. in einem zufälligen oder pseudozufälligen Muster. Im oben genannten Beispiel kann das erste Eingabeelement bei einem anderen, z.B. zweiten, Eingabeschritt während der Eingabe der Sicherheitsinformation beispielsweise mit den Ziffern "1", "3" und "6" belegt sein bzw. diesen zugewiesen sein, das zweite Eingabeelement den Ziffern "2", "4" und "5". Diese Variation kann alternativ oder zusätzlich auch (erst) bei einer erneuten Eingabe der Sicherheitsinformation erfolgen. Dies erhöht die Sicherheit weiter, da eine blosse Wiederholung einer z.B. abgefilmten Eingabesequenz aufgrund der (z.B. zufälligen) Variation der Zuweisungen mit sehr grosser Wahrscheinlichkeit eine falsche Sicherheitsinformation hervorbringt.

Weitere Schritte können in einem solchen Fall eingeleitet werden, z.B. progressive oder konservative Eingabeverzögerung bei (z.B. mehrfacher) fehlerhafter Eingabe, automatische photographische Aufnahme des Benutzers mit Hilfe einer eingebauten Kamera, automatisierte Warnmeldung an Sicherheitsbehörden, Einbehalten und/oder Sperren der Karte, Begrenzung eines Finanztransaktionsvolumens etc.

In einer bevorzugten Ausführungsform des Verfahrens ist jedes der Eingabeelemente während mindestens einem der Eingabeschritte, insbesondere während allen Eingabeschritten, jeweils einer gleichen Anzahl von Zeichen zugewiesen. Somit wird die Übersichtlichkeit erhöht. Dabei kann sich die Anzahl der zugewiesenen Zeichen pro Eingabeelement für unterschiedliche Eingabeschritte ändern. Dies erhöht die Sicherheit weiter, da mehr Variationsmöglichkeiten zur Verfügung stehen.

In einer anderen bevorzugten Ausführungsform wird die Zuweisung mindestens eines der Eingabeelemente (insbesondere aller Eingabeelemente) zu einem oder mehreren Zeichen zwischen dem ersten und dem zweiten Eingabeschritt variiert, insbesondere zufällig oder pseudozufällig. Dies erhöht die Sicherheit weiter, da durch die Kombination "mehrfache Zuweisung" und "variable zufällige Zuweisung" keine Rückschlüsse auf die Sicherheitsinformation möglich sind.

In einer anderen bevorzugten Ausführungsform wird die Zuweisung mindestens eines der Eingabeelemente (insbesondere aller Eingabeelemente) zu einem oder mehreren Zeichen zwischen zwei Eingaben der Sicherheitsinformation variiert, insbesondere zufällig oder pseudozufällig. Dies erhöht die Sicherheit weiter, da durch die Kombination "mehrfache Zuweisung" und "variable zufällige Zuweisung" keine Rückschlüsse auf die Sicherheitsinformation möglich sind. Dabei kann auch vorgesehen sein, die Zuweisungen während aller Eingabeschritte bei einer einzelnen Eingabe der Sicherheitsinformation konstant zu halten und nur zwischen zwei Eingaben der Sicherheitsinformation zu variieren, was die Bedienbarkeit verbessert.

In einer anderen bevorzugten Ausgestaltung wird eine Position und/ oder eine geometrische Ausgestaltung (z.B. Grösse, Ausrichtung, Form etc.) mindestens eines der Eingabeelemente, insbesondere aller Eingabeelemente, zwischen zwei Eingabeschritten und/oder zwischen zwei Eingaben der Sicherheitsinformation variiert, z.B. auf einem berührungsempfindlichen Bildschirm. Somit wird die Sicherheit weiter erhöht.

Ein weiterer Aspekt der Erfindung betrifft ein Computerprogrammprodukt, welches in den internen Speicher eines digitalen Computers einer Eingabevorrichtung geladen werden kann und Softwarecodeabschnitte umfasst, mit denen die Schritte eines der oben beschriebenen Verfahrens ausgeführt werden, wenn das Produkt auf dem Computer läuft.

Ein weiterer Aspekt der Erfindung betrifft eine Verwendung einer oben beschriebenen Eingabevorrichtung und/ oder eines oben beschriebenen Verfahrens in mindestens einem aus der Gruppe aus
- einem Zugangskontrollsystem,
- einem Smartphone,
- einem Tablet-Computer,
- einem Notebook,
- einem Computer, und
- einem Autorisierungsgerät für eine Finanztransaktion. Somit wird die Sicherheit der Eingabe einer Sicherheitsinformation erhöht.

Die beschriebenen Ausführungsformen beziehen sich gleichermaßen auf die Erzeugnisansprüche und die Verfahrensansprüche. Wie es für den Fachmann offensichtlich ist, können synergistische Effekte aus der Kombination von Merkmalen unterschiedlicher Ausführungsformen entstehen, obgleich diese nicht im Detail beschrieben sein mögen.

### Kurze Beschreibung der Zeichnungen

Weitere vorteilhafte Ausgestaltungen der Erfindung ergeben sich aus den abhängigen Ansprüchen und den anhand der Zeichnungen nachfolgend dargestellten Ausführungsbeispielen. Es zeigen:
Fig. 1a und 1b (nicht beansprucht) zeigen eine Eingabevorrichtung 10 gemäss Stand der Technik während eines ersten und zweiten Eingabeschritts,
Fig. 2a bis 2d zeigen eine Eingabevorrichtung 10 gemäss einer ersten Ausführungsform der Erfindung während eines ersten bis vierten Eingabeschritts von Zeichen 101-104 einer Sicherheitsinformation 100,
Fig. 3a und 3b zeigen eine Eingabevorrichtung 10 gemäss einer zweiten Ausführungsform der Erfindung während eines ersten und zweiten Eingabeschritts von Zeichen 101-102 einer Sicherheitsinformation 100,
Fig. 4a bis 4c zeigen eine Eingabevorrichtung 10 gemäss einer dritten Ausführungsform der Erfindung während eines ersten, zweiten und dritten Eingabeschritts von Zeichen 101-103 einer Sicherheitsinformation 100,
Fig. 5 zeigt schematisch einen ersten bis vierten Eingabeschritt eines Verfahrens zur Eingabe einer Sicherheitsinformation gemäss der Erfindung sowie eine Übermittlung an eine entfernte Autorisierungsstelle, und
Fig. 6a und 6b zeigen eine Eingabevorrichtung 10 gemäss einer vierten Ausführungsform der Erfindung während einer ersten und einer zweiten Eingabe von Zeichen 101-104 einer Sicherheitsinformation 100.

### Weg(e) zur Ausführung der Erfindung

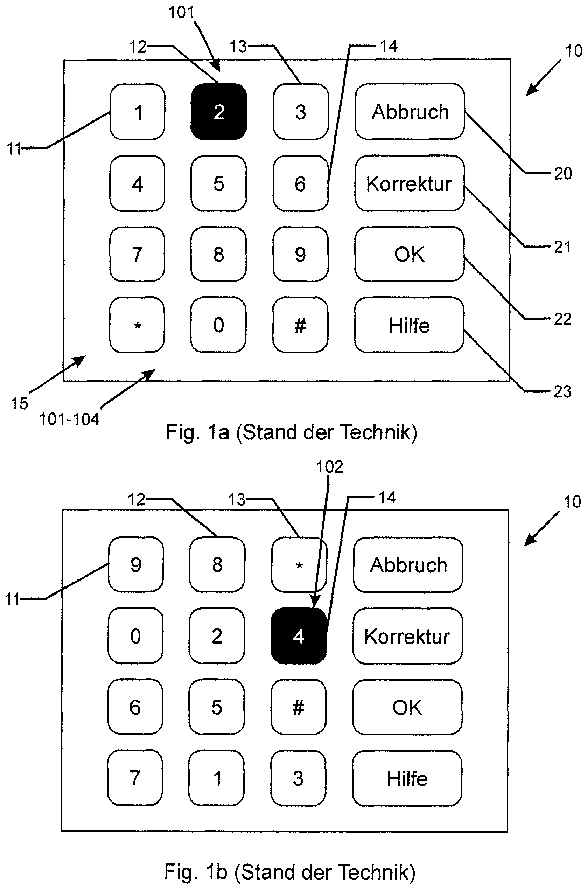

Fig. 1a und 1b zeigen eine nicht beanspruchte Eingabevorrichtung 10 gemäss Stand der Technik während eines ersten (Fig. 1a) und eines zweiten (Fig. 1b) Eingabeschritts. Im ersten Eingabeschritt wird ein erstes Zeichen 101 (die Ziffer "2") einer Sicherheitsinformation 100 (nicht dargestellt) eingegeben (Fig. 1a), im zweiten, zeitlich daran anschliessenden Eingabeschritt wird ein zweites Zeichen 102 (die Ziffer "4") der Sicherheitsinformation 100 eingegeben (Fig. 1b). Dies wird durch die invertierten Tasten in den Fig. 1a und 1b grafisch dargestellt. Zur Eingabe der Zeichen umfasst die Eingabevorrichtung 10 Eingabeelemente 11, 12, 13, 14 ... (nur die ersten vier sind hier der Übersichtlichkeit halber mit Bezugsziffern gekennzeichnet), welche jeweils einer Ziffer "1" bis "0" bzw. einem Symbol "*" und "#" der Sicherheitsinformation 100 zugeordnet sind. Diese Zuweisungen variieren zwischen dem ersten und dem zweiten Eingabeschritt. So ist die Ziffer "1" im ersten Eingabeschritt dem Eingabeelement 11 zugeordnet, im zweiten Eingabeschritt weist das Eingabeelement 11 eine Zuweisung zur Ziffer "9" auf. Des Weiteren weist die Eingabevorrichtung 10 zusätzliche Eingabeelemente 20-23 auf, welche keinen möglichen Zeichen der Sicherheitsinformation 100 zugeordnet sind, sondern mit speziellen Funktionen "Abbruch", "Korrektur", "OK" und "Hilfe" belegt sind. Soll nun die Sicherheitsinformation 100 bestehend aus der Zeichenfolge "2" - "4" eingegeben werden, so kann ein Benutzer im ersten Eingabeschritt das Eingabeelement 12 betätigen, wodurch die Ziffer "2" (Zeichen 101) in die Eingabevorrichtung eingegeben wird (Fig. 1a) . Im zweiten Eingabeschritt betätigt der Benutzer sodann das Eingabeelement 14, wodurch die Ziffer "4" (Zeichen 102) eingegeben wird. Danach wird die Eingabe der Sicherheitsinformation 100 durch Drücken der OK-Taste bestätigt (nicht gezeigt), die Sicherheitsinformation wird geprüft und - bei korrekter Eingabe - wird z.B. eine Finanztransaktion autorisiert. Die Eingabevorrichtung 10 ist als mechanisches Tastenfeld ausgestaltet, die Eingabeelemente 11, 12, 13, 14, ... werden durch Metalltasten mit transparenter Oberseite inkl. integrierter LCD-Anzeigevorrichtungen 15 in den Tasten gebildet. Die Eingabeelemente 11, 12, 13, 14, ... dienen wie oben beschrieben zur Eingabe von Zeichen der Sicherheitsinformation 100, die Anzeigevorrichtungen zeigen dabei während jedem Eingabeschritt die den jeweiligen Eingabeelementen 11, 12, 13, 14, ... zugewiesenen Zeichen 101, 102, 103, 104, ... (nur die ersten vier sind hier der Übersichtlichkeit halber mit Bezugsziffern gekennzeichnet) als mögliche Zeichen der Sicherheitsinformation 100 an. Es sei an dieser Stelle darauf hingewiesen, dass nicht alle möglichen Zeichen 101-104 Teil der Sicherheitsinformation sein müssen bzw. in diesem konkreten Beispiel auch nicht sind (nur das Zeichen 101, also die Ziffer "2" und das Zeichen 102, also die Ziffer "4" bilden hier die Sicherheitsinformation 100).

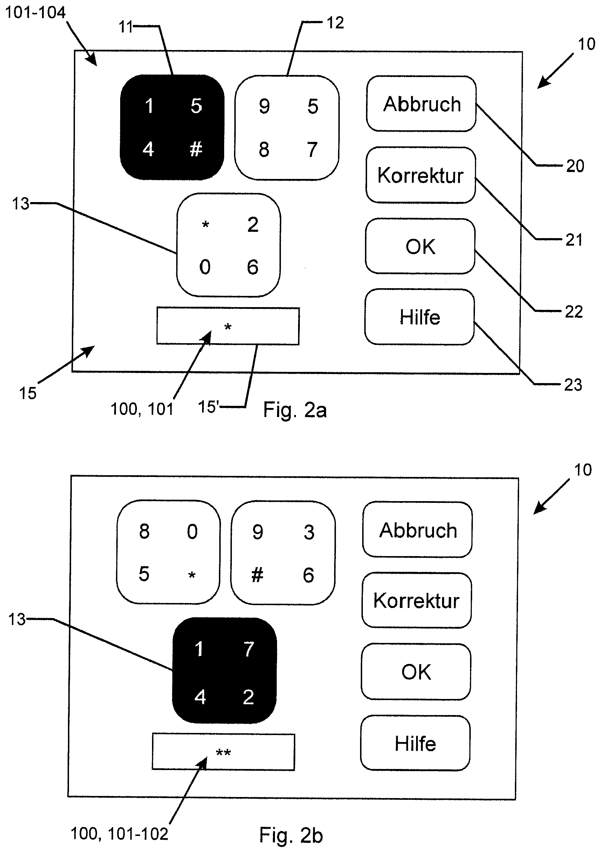

Die Fig. 2a-2d zeigen eine Eingabevorrichtung 10 gemäss einer ersten Ausführungsform der Erfindung während eines ersten bis vierten Eingabeschritts von möglichen Zeichen 101, 102, 103, 104, ... einer Sicherheitsinformation 100. Die Eingabevorrichtung 10 ist im mechanischen Aufbau ähnlich zu der Eingabevorrichtung 10 aus den Fig. 1a und 1b ausgestaltet mit den Unterschieden,
i) dass drei Eingabeelemente 11, 12, 13 für mögliche Zeichen 101, 102, 103, 104, ... der Sicherheitsinformation 100 vorgesehen sind, welche jeweils eine Zuweisung zu vier möglichen Zeichen der Sicherheitsinformation 100 aufweisen (die Anzahl der zugewiesenen Zeichen ist in jedem Eingabeschritt konstant und grösser als eins) und
ii) dass eine zusätzliche Anzeigevorrichtung 15' vorgesehen ist, in welcher die bereits eingegebenen Zeichen 101-104 der Sicherheitsinformation 100 als "*" dargestellt werden.

Der Unterschied i) bewirkt, dass keine eineindeutige Zuweisung "betätigtes Eingabeelement" - "eingegebenes Zeichen" möglich ist, was die Sicherheit der Sicherheitsinformationseingabe in Kombination mit den variierbaren Zuweisungen erhöht. Da die Zuweisung der Zeichen zu den Eingabeelementen 11-13 zufällig erfolgt und für alle Eingabeelemente 11-13 und für jeden Eingabeschritt zufällig variiert wird, wird durch die Kombination "mehrfache Zuweisung" und "variable zufällige Zuweisung" ein stark erhöhtes Mass an Sicherheit erreicht, da ein unbefugtes Abfilmen keinen Rückschluss auf die Sicherheitsinformation 100 zulässt.

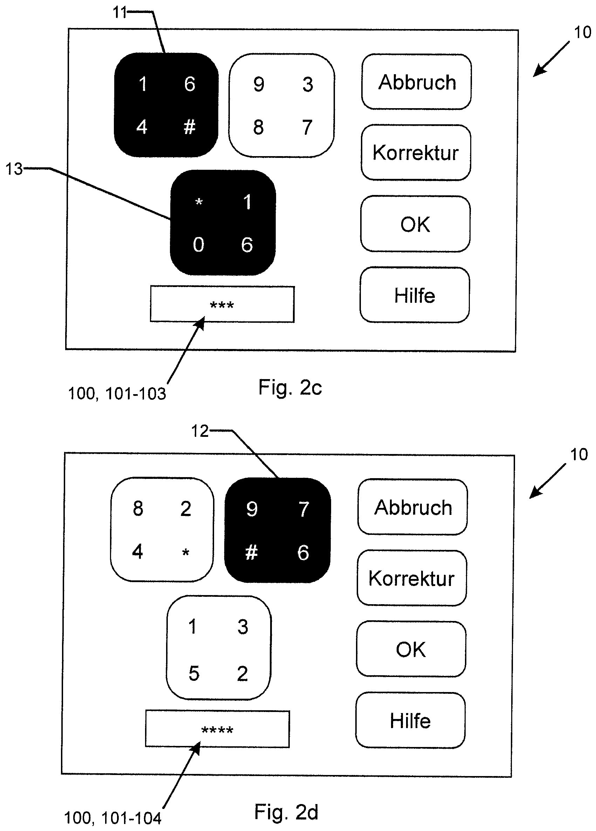

Möchte ein Benutzer nun die Zeichenfolge "1" - "7" - "1" - "9" der Sicherheitsinformation 100 in die Eingabevorrichtung 10 eingeben, so kann er dies in einem ersten Eingabeschritt der Fig. 2a durch Betätigung des Eingabeelements 11 (das Zeichen 101, also die Ziffer "1" ist im ersten Eingabeschritt dem Eingabeelement 11 zugewiesen), in einem zweiten Eingabeschritt der Fig. 2b durch Betätigung des Eingabeelements 13 (das Zeichen 102, also die Ziffer "7" ist im zweiten Eingabeschritt dem Eingabeelement 13 zugewiesen), in einem dritten Eingabeschritt der Fig. 2c durch Betätigung des Eingabeelements 11 oder 13 (das Zeichen 103, also die Ziffer "1" ist im dritten Eingabeschritt sowohl dem Eingabeelement 11 als auch dem Eingabeelement 13 zugewiesen) und in einem vierten Eingabeschritt der Fig. 2d durch Betätigung des Eingabeelements 12 (das Zeichen 104, also die Ziffer "9" ist im vierten Eingabeschritt dem Eingabeelement 12 zugewiesen) erreichen. Die jeweils betätigten Eingabeelemente sind der Übersichtlichkeit halber invertiert dargestellt. Die zusätzliche Anzeigevorrichtung 15` zeigt dabei die bereits eingegebenen Zeichen 101-104 der Sicherheitsinformation 100 durch "*" kodiert an. Ein bestimmtes Zeichen kann dabei - wie im dritten Eingabeschritt der Fig. 2c gezeigt - durchaus gleichzeitig mehreren Eingabeelementen zugewiesen sein, allerdings vorzugsweise nicht mehrfach einem einzelnen Eingabeelement. Auch ist es denkbar, in einem Eingabeschritt ein bestimmtes Zeichen durch z.B. gleichzeitige Betätigung mehrerer Eingabeelemente einzugeben oder ein "Umschalt-Eingabeelement" vorzusehen, welches die Belegung anderer Eingabeelemente ändert, ohne selbst ein Zeichen einzugeben (beides nicht gezeigt).

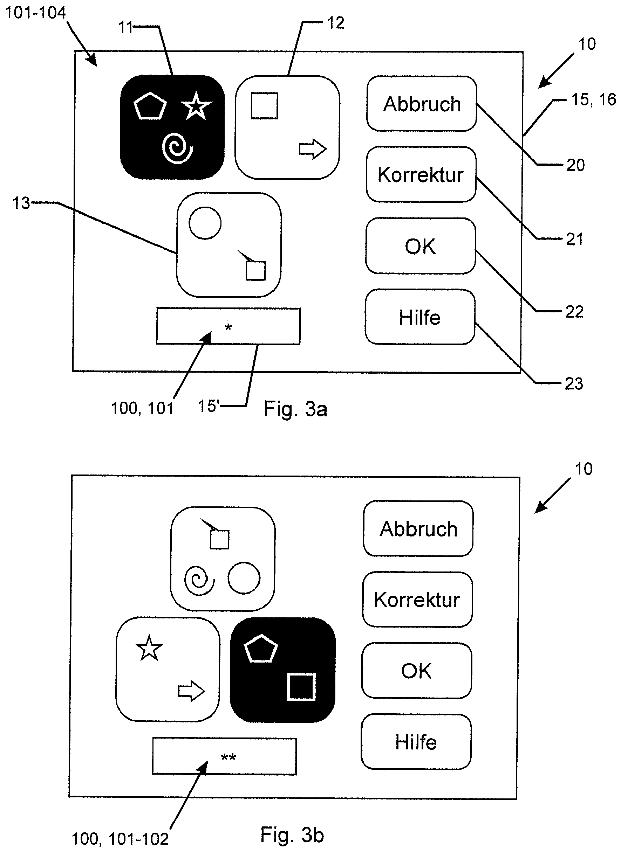

Die Fig. 3a und 3b zeigen eine Eingabevorrichtung 10 gemäss einer zweiten Ausführungsform der Erfindung während eines ersten (Fig. 3a) und zweiten (Fig. 3b) Eingabeschritts von Zeichen 101, 102 einer Sicherheitsinformation 100. Die zweite Ausführungsform ist der ersten Ausführungsform aus den Fig. 2a-2d ähnlich mit den folgenden Unterschieden:
i) Es werden Symbole ("Fünfeck", "Stern", "Spirale", "Quadrat", "Pfeil", "Kreis", "Sprechblase") anstatt Ziffern als mögliche Zeichen 101, 102, 103, 104, ... der Sicherheitsinformation 100 verwendet. Dadurch wird die Komplexität erhöht und die Sicherheit verbessert.
ii) Die Anzahl der zugewiesenen Zeichen zu den Eingabeelementen 11-13 ist nicht - wie in der ersten Ausführungsform - konstant vier pro Eingabeelement, sondern unterschiedlich für verschiedene Eingabeelemente und Eingabeschritte. Auch dies dient einer Verbesserung der Sicherheit durch Erhöhung der Variationsmöglichkeiten.
iii) Die Eingabevorrichtung 10 umfasst einen berührungsempfindlichen Bildschirm ("touchscreen") 16 und die einzelnen Eingabeelemente 11, 12, 13 werden durch gekennzeichnete Bereiche auf dem berührungsempfindlichen Bildschirm gebildet. Dabei zeigt der berührungsempfindliche Bildschirm als Anzeigevorrichtung 15 die jeweiligen Zuweisungen der einzelnen Eingabeelemente 11-13 in den gekennzeichneten Bereichen an. Somit kann die Eingabevorrichtung 10 einfacher und benutzerfreundlicher ausgestaltet werden.

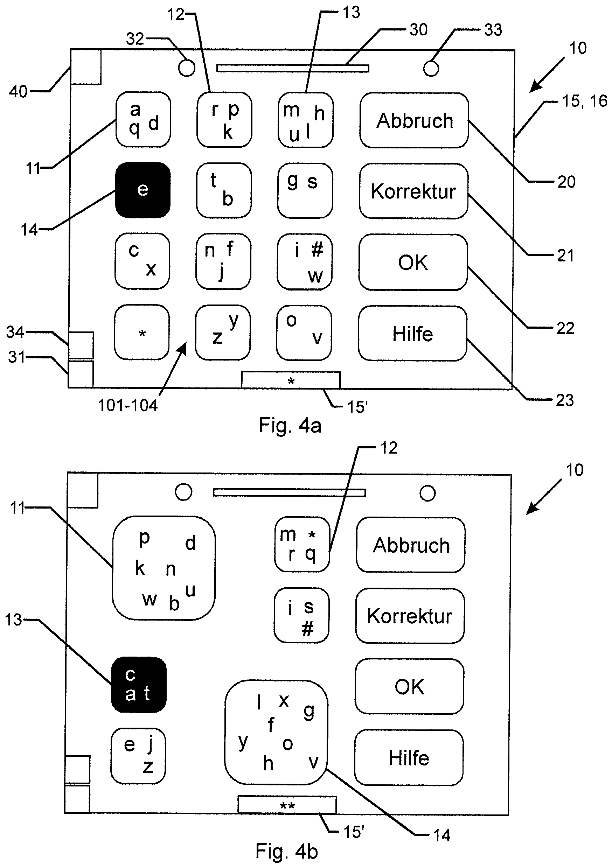

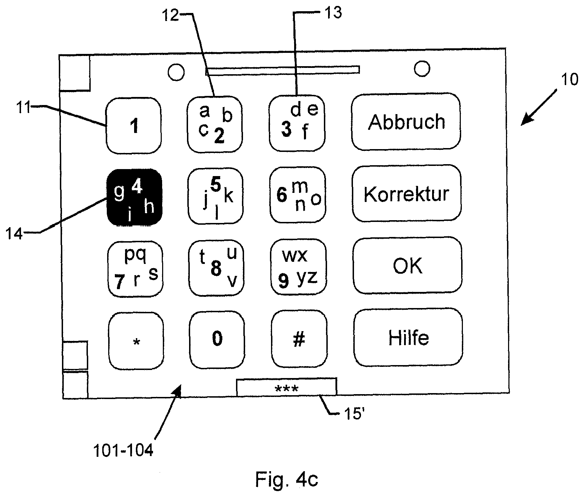

Die Fig. 4a bis 4c zeigen eine Eingabevorrichtung 10 gemäss einer dritten Ausführungsform der Erfindung während eines ersten (Fig. 4a), zweiten (Fig. 4b) und dritten (Fig. 4c) Eingabeschritts von Zeichen 101, 102, 103 einer Sicherheitsinformation 100. Die Eingabevorrichtung 10 ähnelt dabei den beiden oben beschriebenen Eingabevorrichtungen 10 der ersten bzw. zweiten Ausführungsformen mit den folgenden Unterschieden:
i) Weder die Anzahl der Eingabeelemente 11, 12, 13, 14, ... noch die Anzahl der zugewiesenen Zeichen noch die zugewiesenen Zeichen 101, 102, 103, 104, ... selbst sind zwischen den Eingabeschritten konstant. Dies dient einer Verbesserung der Sicherheit durch Erhöhung der Variationsmöglichkeiten.
ii) Die Eingabevorrichtung 10 umfasst ein Kartenterminal 30 und ein NFC-Modul 31 zur Kommunikation mit einer post-/ec-/Kreditkarte. Weiterhin sindeine Kamera 32, eine Iris-Scanner 33 und eine Fingerabdruck-Sensor 34 vorgesehen, um physiologische Merkmale des Benutzers zu erkennen, welche als Teil der Sicherheitsinformation 100 verwendet werden. Dadurch kann der Informationsgehalt der Sicherheitsinformation 100 erhöht werden, wodurch die Sicherheit der Benutzerauthentifizierung verbessert wird.
iii) Ein in die Eingabevorrichtung 10 integrierter Computer 40 in Form eines Mikrocontrollers übernimmt die Steuerung der Eingabevorrichtung 10 und führt das beschriebene Eingabeverfahren aus. Des Weiteren dient er zur Kommunikation mit externen Modulen, z.B. einer entfernten und via Netzwerk angebundenen Autorisierungsstelle.

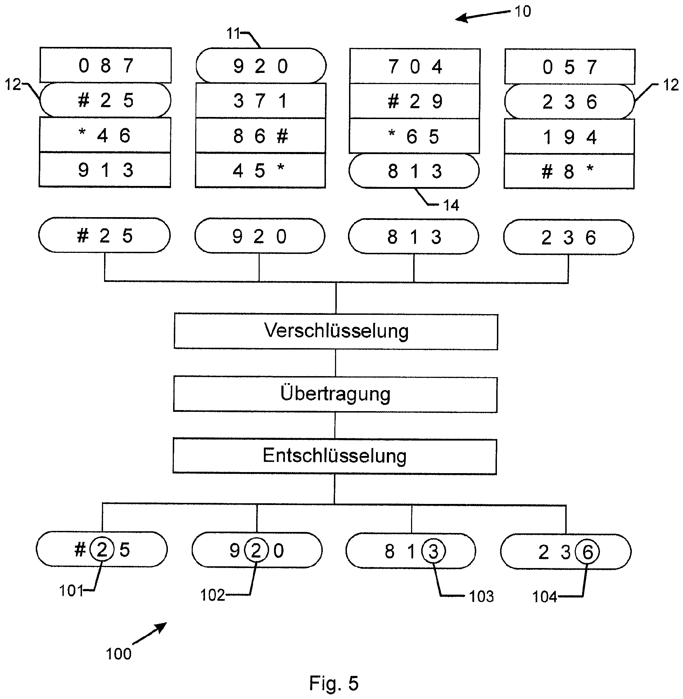

Die Fig. 5 zeigt schematisch einen ersten bis vierten Eingabeschritt eines Verfahrens zur Eingabe einer Sicherheitsinformation 100 in eine Eingabevorrichtung 10 gemäss der Erfindung sowie eine Übermittlung an eine entfernte Autorisierungsstelle.

Dabei umfasst die Sicherheitsinformation 100 die Zeichen "2" (erstes Zeichen 101) - "2" (zweites Zeichen 102) - "3" (drittes Zeichen 103) - "6" (viertes Zeichen 104). Durch Betätigung von Eingabeelementen 12, 11, 14, 12 (in dieser Reihenfolge, hier von links nach rechts in den obersten vier Zeilen dargestellt und jeweils mit abgerundeten Ecken zur Verdeutlichung) der Eingabevorrichtung 10 wird die Sicherheitsinformation 100 in die Eingabevorrichtung 10 eingegeben (nicht näher dargestellt). Durch die Kombination "mehrfache Zuweisung" und "variable zufällige Zuweisung" wird ein stark erhöhtes Mass an Sicherheit erreicht, da ein unbefugtes Abfilmen keinen Rückschluss auf die Sicherheitsinformation 100 zulässt, wie in der fünften Zeile von oben dargestellt ist (die Sicherheitsinformation 100 könnte z.B. auch "5" - "0" - "3" - "6" lauten, was bei einer anderen zufälligen Zuweisung von Zeichen zu Eingabeelementen mit grosser Wahrscheinlichkeit zur Falscheingabe führen würde). Die eingegebene Sicherheitsinformation 100 wird dann mittels eines in die Eingabevorrichtung 10 integrierten Computers 40 verschlüsselt (oder ein hash-Wert wird generiert, wie dem Fachmann hinlänglich bekannt ist), mittels einer Netzwerkverbindung an eine entfernte Autorisierungsstelle (z.B. einen Bankrechner) übertragen, dort entschlüsselt und auf Richtigkeit geprüft. Bei positivem Ergebnis kann dann z.B. eine Autorisierung eines Bezahlungsvorgangs vorgenommen werden.

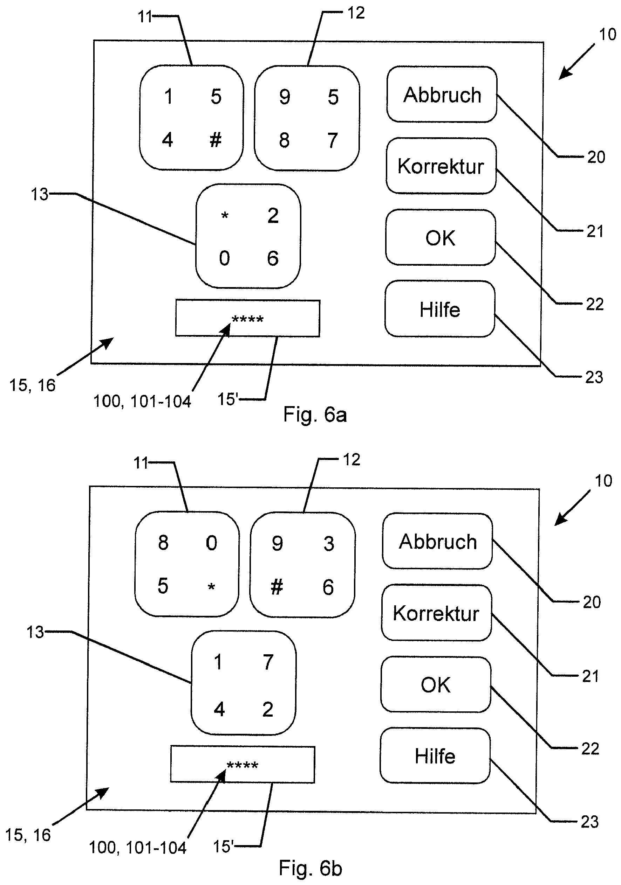

Die Fig. 6a und 6b zeigen eine Eingabevorrichtung 10 gemäss einer vierten Ausführungsform der Erfindung während einer ersten und einer zweiten Eingabe von Zeichen 101-104 einer Sicherheitsinformation 100. Wie in der zweiten und der dritten Ausführungsform umfasst die Eingabevorrichtung 10 einen berührungsempfindlichen Bildschirm ("touchscreen") 16, wobei die Eingabeelemente 11, 12, 13 durch gekennzeichnete Bereiche auf dem berührungsempfindlichen Bildschirm 16 gebildet werden, und welcher auch als Anzeigevorrichtung 15 fungiert und die Zuweisungen der den Eingabeelementen 11, 12, 13 zugewiesenen Zeichen in den jeweiligen gekennzeichneten Bereichen anzeigt. Die weiteren Elemente entsprechen den oben beschriebenen Ausführungsformen.

In der vierten Ausführungsform ist die Zuweisung der Eingabeelemente 11, 12, 13 während einer einzelnen Eingabe der Sicherheitsinformation 100 umfassend die Zeichen 101-104 konstant und wird nur zwischen zwei Eingaben der Sicherheitsinformation 100 variiert. Die Fig. 6a zeigt somit die komplette erste Eingabe der Sicherheitsinformation und die Fig. 6b zeigt die komplette zweite Eingabe (also nicht wie in den anderen Figuren die einzelnen Eingabeschritte). Die erste Eingabe der Sicherheitsinformation "1"-"8"-"5"-"1" (Fig. 6a) kann welche z.B. durch aufeinanderfolgendes Betätigen der Eingabeelemente 11-12-12-11 oder auch 11-12-11-11 in die Eingabevorrichtung 10 erfolgen. Die zweite Eingabe der gleichen Sicherheitsinformation "1"-"8"-"5"-"1" (Fig. 6b) kann aufgrund der zufällig variierten Zuweisungen nur durch Betätigen der Eingabeelemente 13-11-11-13 erfolgen. Während der einzelnen Eingabeschritte bleibt die Zuweisung wie gesagt konstant, so dass sich eine erleichterte Bedienbarkeit ergibt. Dennoch ergibt sich eine verbesserte Sicherheit der Eingabe, da ein Abfilmen aufgrund der Kombination "mehrfache Zuweisung" und "variable zufällige Zuweisung" keinen eindeutigen Rückschluss auf die Sicherheitsinformation 100 zulässt.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der weiter unten folgenden Ansprüche ausgeführt werden kann. Dabei ist es für den Fachmann offensichtlich, dass die beschriebenen Merkmale der einzelnen Ausführungsformen nicht auf diese beschränkt sind, sondern beliebig kombiniert werden können, ohne von der erfinderischen Idee abzuweichen.

### Erfindungsaspekte

1. Eingabevorrichtung (10) zur Eingabe einer Sicherheitsinformation (100),
   wobei die Sicherheitsinformation (100) eine Folge von mindestens zwei Zeichen (101, 102, 103, 104, ...) umfasst,
   wobei die Eingabevorrichtung (10) eine Mehrzahl von Eingabeelementen (11, 12, 13, 14, ...) aufweist, so dass bei einem Eingabeschritt durch Betätigung eines der Eingabeelemente (11, 12, 13, 14, ...) jeweils ein dem Eingabeelement (11, 12, 13, 14, ...) zugewiesenes Zeichen (101, 102, 103, 104, ...) in die Eingabevorrichtung (10) eingebbar ist,
   dadurch gekennzeichnet, dass mindestens eines der Eingabeelemente (11, 12, 13, 14, ...) während mindestens einem der Eingabeschritte eine Zuweisung zu einer Mehrzahl von Zeichen (101, 102, 103, 104, ...) aufweist, und
   dass die Zuweisung mindestens eines der Eingabeelemente (11, 12, 13, 14, ...) zu einem oder mehreren Zeichen (101, 102, 103, 104, ...) zwischen zwei Eingabeschritten variierbar ist und/oder
   dass die Zuweisung mindestens eines der Eingabeelemente (11, 12, 13, 14, ...) zu einem oder mehreren Zeichen (101, 102, 103, 104, ...) zwischen zwei Eingaben der Sicherheitsinformation (100) variierbar ist.
2. Eingabevorrichtung (10) nach Erfindungsaspekt 1, wobei jedes der Eingabeelemente (11, 12, 13, 14, ...) während mindestens einem Eingabeschritt, insbesondere während allen Eingabeschritten, jeweils eine Zuweisung zu einer gleichen Anzahl von zugewiesenen Zeichen (101, 102, 103, 104, ...) aufweist.
3. Eingabevorrichtung (10) nach Erfindungsaspekt 1, wobei mindestens zwei der Eingabeelemente (11, 12, 13, 14, ...) während mindestens einem Eingabeschritt eine Zuweisung zu einer unterschiedlichen Anzahl von Zeichen (101, 102, 103, 104, ...) aufweisen.
4. Eingabevorrichtung (10) nach einem der vorhergehenden Erfindungsaspekte, derart ausgestaltet, dass die Zuweisung mindestens eines der Eingabeelemente (11, 12, 13, 14, ...), insbesondere aller Eingabeelemente (11, 12, 13, 14, ...), zu einem oder mehreren dem Eingabeelement (11, 12, 13, 14, ...) zugewiesenen Zeichen (101, 102, 103, 104, ...) zwischen zwei Eingabeschritten, insbesondere zwischen allen Eingabeschritten, variiert wird, insbesondere zufällig oder pseudozufällig.
5. Eingabevorrichtung (10) nach einem der vorhergehenden Erfindungsaspekte, derart ausgestaltet, dass die Zuweisung mindestens eines der Eingabeelemente (11, 12, 13, 14, ...), insbesondere aller Eingabeelemente (11, 12, 13, 14, ...), zu einem oder mehreren dem Eingabeelement (11, 12, 13, 14, ...) zugewiesenen Zeichen (101, 102, 103, 104, ...) zwischen zwei Eingaben der Sicherheitsinformation (100) variiert wird, insbesondere zufällig oder pseudozufällig.
6. Eingabevorrichtung (10) nach einem der Erfindungsaspekte 1 bis 3, derart ausgestaltet, dass die Zuweisung mindestens eines der Eingabeelemente (11, 12, 13, 14, ...), insbesondere aller Eingabeelemente (11, 12, 13, 14, ...), zu einem oder mehreren dem Eingabeelement (11, 12, 13, 14, ...) zugewiesenen Zeichen (101, 102, 103, 104, ...) zwischen zwei Eingaben der Sicherheitsinformation (100) variiert wird, insbesondere zufällig oder pseudozufällig,
   und derart ausgestaltet, dass die Zuweisung aller Eingabeelemente (11, 12, 13, 14, ...) zu einem oder mehreren den Eingabeelementen (11, 12, 13, 14, ...) zugewiesenen Zeichen (101, 102, 103, 104, ...) während aller Eingabeschritte der Sicherheitsinformation (100) bei einer einzelnen Eingabe der Sicherheitsinformation (100) konstant ist.
7. Eingabevorrichtung (10) nach einem der vorangehenden Erfindungsaspekte beinhaltend eine Anzeigevorrichtung (15), welche dazu ausgestaltet ist, die Zuweisungen der den Eingabeelementen (11, 12, 13, 14, ...) zugewiesenen Zeichen (101, 102, 103, 104, ...) anzuzeigen.
8. Eingabevorrichtung (10) nach einem der vorangehenden Erfindungsaspekte umfassend einen berührungsempfindlichen Bildschirm (16) und derart ausgestaltet, dass die Eingabeelemente (11, 12, 13, 14, ...) durch gekennzeichnete Bereiche auf dem berührungsempfindlichen Bildschirm gebildet werden.
9. Eingabevorrichtung (10) nach den Erfindungsaspekten 7 und 8, derart ausgestaltet, dass die Zuweisungen der den Eingabeelementen (11, 12, 13, 14, ...) zugewiesenen Zeichen (101, 102, 103, 104, ...) in den jeweiligen gekennzeichneten Bereichen auf dem berührungsempfindlichen Bildschirm angezeigt werden.
10. Eingabevorrichtung (10) nach einem der vorangehenden Erfindungsaspekte weiterhin umfassend mindestens ein Eingabeelement (20, 21, 22, 23), welches keinem der Zeichen (101, 102, 103, 104, ...) der Sicherheitsinformation (100) zugewiesen ist.
11. Eingabevorrichtung (10) nach einem der vorangehenden Erfindungsaspekte weiterhin umfassend mindestens eines aus der Gruppe bestehend aus:
   - ein Kartenterminal (30),
   - ein drahtgebundenes oder drahtloses Kommunikationsgerät (31), insbesondere beinhaltend RFID, NFC, Bluetooth und/ oder BLE,
   - eine Kamera (32),
   - ein Iris-Scanner (33),
   - ein Fingerabdruck-Sensor (34).
12. Eingabevorrichtung (10) nach einem der vorangehenden Erfindungsaspekte, dazu ausgestaltet, eine Position und/ oder eine geometrische Ausgestaltung mindestens eines der Eingabeelemente (11, 12, 13, 14, ...), insbesondere aller Eingabeelemente (11, 12, 13, 14, ...), zwischen zwei Eingabeschritten, insbesondere zwischen allen Eingabeschritten, und/oder zwischen zwei Eingaben der Sicherheitsinformation (100) zu variieren.
13. Verfahren zur Eingabe einer Sicherheitsinformation (100),
   wobei die Sicherheitsinformation (100) eine Folge von mindestens zwei Zeichen (101, 102, 103, 104, ...) umfasst,
   das Verfahren umfassend die folgenden Schritte:
   - in einem ersten Eingabeschritt Eingabe eines ersten Zeichens (101) durch Betätigung eines Eingabeelements (11, 12, 13, 14, ...) aus einer Mehrzahl von Eingabeelementen (11, 12, 13, 14, ...) einer Eingabevorrichtung (10) und
   - in einem zweiten Eingabeschritt Eingabe eines zweiten Zeichens (102) durch Betätigung eines Eingabeelements (11, 12, 13, 14, ...) aus einer Mehrzahl von Eingabeelementen (11, 12, 13, 14, ...) der Eingabevorrichtung (10),
   dadurch gekennzeichnet, dass mindestens eines der Eingabeelemente (11, 12, 13, 14, ...) während mindestens einem der Eingabeschritte eine Zuweisung zu einer Mehrzahl von Zeichen (101, 102, 103, 104, ...) aufweist, und
   dass die Zuweisung mindestens eines der Eingabeelemente (11, 12, 13, 14, ...) zu einem oder mehreren Zeichen (101, 102, 103, 104, ...) zwischen dem ersten und dem zweiten Eingabeschritt variiert wird, insbesondere zufällig oder pseudozufällig, und/oder
   dass die Zuweisung mindestens eines der Eingabeelemente (11, 12, 13, 14, ...) zu einem oder mehreren Zeichen (101, 102, 103, 104, ...) zwischen zwei Eingaben der Sicherheitsinformation (100) variiert wird, insbesondere zufällig oder pseudozufällig.
14. Verfahren nach Erfindungsaspekt 13, wobei jedes der Eingabeelemente (11, 12, 13, 14, ...) während mindestens einem der Eingabeschritte, insbesondere während allen Eingabeschritten, jeweils einer gleichen Anzahl von Zeichen (101, 102, 103, 104, ...) zugewiesen ist.
15. Verfahren nach einem der Erfindungsaspekte 13 oder 14, wobei die Zuweisung mindestens eines der Eingabeelemente (11, 12, 13, 14, ...), insbesondere aller Eingabeelemente (11, 12, 13, 14, ...), zu einem oder mehreren Zeichen (101, 102, 103, 104, ...) zwischen dem ersten und dem zweiten Eingabeschritt variiert wird, insbesondere zufällig oder pseudozufällig.
16. Verfahren nach einem der Erfindungsaspekte 13 bis 15, wobei die Zuweisung mindestens eines der Eingabeelemente (11, 12, 13, 14, ...), insbesondere aller Eingabeelemente (11, 12, 13, 14, ...), zu einem oder mehreren Zeichen (101, 102, 103, 104, ...) zwischen zwei Eingaben der Sicherheitsinformation (100) variiert wird, insbesondere zufällig oder pseudozufällig.
17. Verfahren nach einem der Erfindungsaspekte 13 oder 14, wobei die Zuweisung mindestens eines der Eingabeelemente (11, 12, 13, 14, ...), insbesondere aller Eingabeelemente (11, 12, 13, 14, ...), zu einem oder mehreren Zeichen (101, 102, 103, 104, ...) zwischen zwei Eingaben der Sicherheitsinformation (100) variiert wird, insbesondere zufällig oder pseudozufällig, und wobei die Zuweisung aller Eingabeelemente (11, 12, 13, 14, ...) zu einem oder mehreren den Eingabeelementen (11, 12, 13, 14, ...) zugewiesenen Zeichen (101, 102, 103, 104, ...) während aller Eingabeschritte der Sicherheitsinformation (100) bei einer einzelnen Eingabe der Sicherheitsinformation (100) konstant ist.
18. Verfahren nach einem der Erfindungsaspekte 13 bis 17, wobei eine Position und/ oder eine geometrische Ausgestaltung mindestens eines der Eingabeelemente (11, 12, 13, 14, ...), insbesondere aller Eingabeelemente (11, 12, 13, 14, ...), zwischen zwei Eingabeschritten und/oder zwischen zwei Eingaben der Sicherheitsinformation (100) variiert wird.
19. Computerprogrammprodukt, welches in den internen Speicher eines digitalen Computers (40) einer Eingabevorrichtung (10) geladen werden kann und Softwarecodeabschnitte umfasst, mit denen die Schritte eines Verfahrens gemäss einem der Erfindungsaspekte 13 bis 18 ausgeführt werden, wenn das Produkt auf dem Computer (40) läuft.
20. Verwendung einer Eingabevorrichtung (10) nach einem der Erfindungsaspekte 1 bis 12 in mindestens einem aus der Gruppe aus
   - einem Zugangskontrollsystem,
   - einem Smartphone,
   - einem Tablet-Computer,
   - einem Notebook,
   - einem Computer, und
   - einem Autorisierungsgerät für eine Finanztransaktion.

## Patentansprüche

1. Eingabevorrichtung (10) zur Eingabe einer Sicherheitsinformation (100),
wobei die Sicherheitsinformation (100) eine Folge von mindestens zwei Zeichen (101, 102, 103, 104, ...) umfasst,
wobei die Eingabevorrichtung (10) eine Mehrzahl von Eingabeelementen (11, 12, 13, 14, ...) aufweist, so dass bei einem Eingabeschritt durch Betätigung eines der Eingabeelemente (11, 12, 13, 14, ...) jeweils ein dem Eingabeelement (11, 12, 13, 14, ...) zugewiesenes Zeichen (101, 102, 103, 104, ...) in die Eingabevorrichtung (10) eingebbar ist,
**dadurch gekennzeichnet, dass** mindestens eines der Eingabeelemente (11, 12, 13, 14, ...) während mindestens einem der Eingabeschritte eine Zuweisung zu einer Mehrzahl von Zeichen (101, 102, 103, 104, ...) aufweist, und
dass die Eingabevorrichtung (10) derart ausgestaltet ist, dass die Zuweisung mindestens eines der Eingabeelemente (11, 12, 13, 14, ...) zu einem oder mehreren dem Eingabeelement (11, 12, 13, 14, ...) zugewiesenen Zeichen (101, 102, 103, 104, ...) zwischen zwei Eingabeschritten variiert wird und/oder
dass die Eingabevorrichtung (10) derart ausgestaltet ist, dass die Zuweisung mindestens eines der Eingabeelemente (11, 12, 13, 14, ...) zu einem oder mehreren dem Eingabeelement (11, 12, 13, 14, ...) zugewiesenen Zeichen (101, 102, 103, 104, ...) zwischen zwei Eingaben der Sicherheitsinformation (100) variiert wird,
so dass kein direkter Bezug zwischen dem betätigen Eingabeelement (11, 12, 13, 14, ...) und dem eigentlich eingegebenen Zeichen (101, 102, 103, 104, ...) der Sicherheitsinformation (100) von aussen erkennbar ist.

2. Eingabevorrichtung (10) nach Anspruch 1, derart ausgestaltet, dass die Zuweisung mindestens eines der Eingabeelemente (11, 12, 13, 14, ...), insbesondere aller Eingabeelemente (11, 12, 13, 14, ...), zu einem oder mehreren dem Eingabeelement (11, 12, 13, 14, ...) zugewiesenen Zeichen (101, 102, 103, 104, ...) zwischen zwei Eingabeschritten, insbesondere zwischen allen Eingabeschritten, variiert wird, insbesondere zufällig oder pseudozufällig.

3. Eingabevorrichtung (10) nach einem der vorhergehenden Ansprüche, derart ausgestaltet, dass die Zuweisung mindestens eines der Eingabeelemente (11, 12, 13, 14, ...), insbesondere aller Eingabeelemente (11, 12, 13, 14, ...), zu einem oder mehreren dem Eingabeelement (11, 12, 13, 14, ...) zugewiesenen Zeichen (101, 102, 103, 104, ...) zwischen zwei Eingaben der Sicherheitsinformation (100) variiert wird, insbesondere zufällig oder pseudozufällig.

4. Eingabevorrichtung (10) nach einem der vorangehenden Ansprüche beinhaltend eine Anzeigevorrichtung (15), welche dazu ausgestaltet ist, die Zuweisungen der den Eingabeelementen (11, 12, 13, 14, ...) zugewiesenen Zeichen (101, 102, 103, 104, ...) anzuzeigen.

5. Eingabevorrichtung (10) nach einem der vorangehenden Ansprüche umfassend einen berührungsempfindlichen Bildschirm (16) und derart ausgestaltet, dass die Eingabeelemente (11, 12, 13, 14, ...) durch gekennzeichnete Bereiche auf dem berührungsempfindlichen Bildschirm gebildet werden.

6. Eingabevorrichtung (10) nach den Ansprüchen 4 und 5, derart ausgestaltet, dass die Zuweisungen der den Eingabeelementen (11, 12, 13, 14, ...) zugewiesenen Zeichen (101, 102, 103, 104, ...) in den jeweiligen gekennzeichneten Bereichen auf dem berührungsempfindlichen Bildschirm angezeigt werden.

7. Eingabevorrichtung (10) nach einem der vorangehenden Ansprüche weiterhin umfassend mindestens ein Eingabeelement (20, 21, 22, 23), welches keinem der Zeichen (101, 102, 103, 104, ...) der Sicherheitsinformation (100) zugewiesen ist.

8. Eingabevorrichtung (10) nach einem der vorangehenden Ansprüche weiterhin umfassend mindestens eines aus der Gruppe bestehend aus:
- ein Kartenterminal (30),
- ein drahtgebundenes oder drahtloses Kommunikationsgerät (31), insbesondere beinhaltend RFID, NFC, Bluetooth und/ oder BLE,
- eine Kamera (32),
- ein Iris-Scanner (33),
- ein Fingerabdruck-Sensor (34).

9. Eingabevorrichtung (10) nach einem der vorangehenden Ansprüche, dazu ausgestaltet, eine Position und/ oder eine geometrische Ausgestaltung mindestens eines der Eingabeelemente (11, 12, 13, 14, ...), insbesondere aller Eingabeelemente (11, 12, 13, 14, ...), zwischen zwei Eingabeschritten, insbesondere zwischen allen Eingabeschritten, und/oder zwischen zwei Eingaben der Sicherheitsinformation (100) zu variieren.

10. Verfahren zur Eingabe einer Sicherheitsinformation (100),
wobei die Sicherheitsinformation (100) eine Folge von mindestens zwei Zeichen (101, 102, 103, 104, ...) umfasst,
das Verfahren umfassend die folgenden Schritte:
- in einem ersten Eingabeschritt Eingabe eines ersten Zeichens (101) durch Betätigung eines Eingabeelements (11, 12, 13, 14, ...) aus einer Mehrzahl von Eingabeelementen (11, 12, 13, 14, ...) einer Eingabevorrichtung (10) und
- in einem zweiten Eingabeschritt Eingabe eines zweiten Zeichens (102) durch Betätigung eines Eingabeelements (11, 12, 13, 14, ...) aus einer Mehrzahl von Eingabeelementen (11, 12, 13, 14, ...) der Eingabevorrichtung (10),
**dadurch gekennzeichnet, dass** mindestens eines der Eingabeelemente (11, 12, 13, 14, ...) während mindestens einem der Eingabeschritte eine Zuweisung zu einer Mehrzahl von Zeichen (101, 102, 103, 104, ...) aufweist, und
dass die Zuweisung mindestens eines der Eingabeelemente (11, 12, 13, 14, ...) zu einem oder mehreren dem Eingabeelement (11, 12, 13, 14, ...) zugewiesenen Zeichen (101, 102, 103, 104, ...) zwischen dem ersten und dem zweiten Eingabeschritt variiert wird, insbesondere zufällig oder pseudozufällig, und/oder
dass die Zuweisung mindestens eines der Eingabeelemente (11, 12, 13, 14, ...) zu einem oder mehreren dem Eingabeelement (11, 12, 13, 14, ...) zugewiesenen Zeichen (101, 102, 103, 104, ...) zwischen zwei Eingaben der Sicherheitsinformation (100) variiert wird, insbesondere zufällig oder pseudozufällig,
so dass kein direkter Bezug zwischen dem betätigen Eingabeelement (11, 12, 13, 14, ...) und dem eigentlich eingegebenen Zeichen (101, 102, 103, 104, ...) der Sicherheitsinformation (100) von aussen erkennbar ist.

11. Verfahren nach Anspruch 10, wobei die Zuweisung mindestens eines der Eingabeelemente (11, 12, 13, 14, ...), insbesondere aller Eingabeelemente (11, 12, 13, 14, ...), zu einem oder mehreren Zeichen (101, 102, 103, 104, ...) zwischen dem ersten und dem zweiten Eingabeschritt variiert wird, insbesondere zufällig oder pseudozufällig.

12. Verfahren nach einem der Ansprüche 10 oder 11, wobei die Zuweisung mindestens eines der Eingabeelemente (11, 12, 13, 14, ...), insbesondere aller Eingabeelemente (11, 12, 13, 14, ...), zu einem oder mehreren Zeichen (101, 102, 103, 104, ...) zwischen zwei Eingaben der Sicherheitsinformation (100) variiert wird, insbesondere zufällig oder pseudozufällig.

13. Verfahren nach einem der Ansprüche 10 bis 12, wobei eine Position und/ oder eine geometrische Ausgestaltung mindestens eines der Eingabeelemente (11, 12, 13, 14, ...), insbesondere aller Eingabeelemente (11, 12, 13, 14, ...), zwischen zwei Eingabeschritten und/oder zwischen zwei Eingaben der Sicherheitsinformation (100) variiert wird.

14. Computerprogrammprodukt, welches in den internen Speicher eines digitalen Computers (40) einer Eingabevorrichtung (10) geladen werden kann und Softwarecodeabschnitte umfasst, mit denen die Schritte eines Verfahrens gemäss einem der Ansprüche 10 bis 13 ausgeführt werden, wenn das Produkt auf dem Computer läuft.

15. Verwendung einer Eingabevorrichtung (10) nach einem der Ansprüche 1 bis 9 in mindestens einem aus der Gruppe aus
- einem Zugangskontrollsystem,
- einem Smartphone,
- einem Tablet-Computer,
- einem Notebook,
- einem Computer, und
- einem Autorisierungsgerät für eine Finanztransaktion.
